# EUROPEAN PATENT SPECIFICATION

(11) **EP 2 423 844 B1**
(45) Date of publication and mention of the grant of the patent: **28.10.2015**
(21) Application number: 11179235.4
(22) Date of filing: 30.08.2011
(51) Int. Cl.: G06F 21/62

(54) **Electronic whiteboard system, electronic whiteboard device, and method of controlling electronic whiteboard**
Elektronisches Whiteboard-System, elektronische Whiteboard-Vorrichtung und Verfahren zum Steuern eines elektronischen Whiteboards
Système de tableau blanc électronique, dispositif de tableau blanc électronique et procédé de contrôle de tableau blanc électronique

(30) Priority: 30.08.2010 JP 2010191985
(43) Date of publication of application: 29.02.2012
(73) Proprietor: Ricoh Company, Ltd., Tokyo 143-8555 (JP)
(72) Inventor: Kemmochi, Eiji, Tokyo, 143-8555 (JP)
(74) Representative: Schwabe - Sandmair - Marx

(56) References cited:
- EP-A1- 1 806 677
- DE-A1- 19 860 803
- US-A1- 2002 108 108
- US-A1- 2004 236 761

## Description

### BACKGROUND OF THE INVENTION

### 1. Field of the Invention

The present invention relates to an electronic whiteboard system and an electronic whiteboard device which are capable of writing and storing a handwritten character or image using a touch panel.

### 2. Description of the Related Art

In recent years, there has been used an electronic whiteboard that can add writing information which is handwritten by using a pen or the like onto a screen surface that mechanically scrolls, and the writing information on the screen surface can be printed out or can be stored as image data, in office meetings or the like (for example, http://www.plus-vision.com/jp/product/captureboard/index.html).

Furthermore, due to recent increasing size and decreasing price of liquid crystal displays (LCD's), electronic whiteboards called electronic information boards or interactive boards having a large-scale display have been also suggested, sold, and used, for example, for a presentation in conferences (Japanese Patent Application Laid-open No. 2000-043484 and http://hitachisoft.jp/products/starboard/index.html).

Such an electronic information board typically includes a display, a touch panel, and a control personal computer (PC). The electronic information board can project the screen of the PC connected thereto on the display in a large size, and the PC that is providing display information can be directly operated through projected screen being touched and the touch panel function mounted on the display being used instead of a mouse operation. Furthermore, electronic whiteboard application software that operates on the connected PC is provided together with these devices.

The application software provides the following functions:
1. a function of drawing handwritten writing data (writing data) via a touch panel;
2. a function of displaying drawn writing data on the desktop screen of the PC in a superimposed manner and storing the drawn writing data;
3. a function of displaying drawn writing data on a whiteboard-like monochrome image in a superimposed manner and storing drawn writing data (an electronic whiteboard function); and
4. a function of incorporating drawn writing data into an application such as PowerPoint (a registered trademark) as contents.

For example, when a conclusion is not made during a conference and so a conference needs be held later once again, a conventional electronic whiteboard can store writing data on a screen as an image, but it is necessary to rewrite it by a hand since it is difficult to reproduce. However, using an electronic information board, writing data is stored in an internal PC at the time of the end of a first conference, and the stored writing data can be displayed on a display at the time of the start of a next conference, so that previous writing information can be reproduced without any trouble.

However, the conventional electronic information board provides basic functions such as a function of storing mainly writing data as image data and a function of reading and displaying stored image data but does not provide any special function regarding reuse as in the above example. Thus, there is no means of simply finding stored writing data, and there is no method of reusing writing information stored by a certain electronic information board in another electronic information board. Therefore, there has been a problem in terms of convenience of reuse of writing data.

In addition, since it is installed in a conference room used by a large indefinite number of people, it is difficult to rigorously perform authentication or the like on a PC. Thus, for example, since writing data stored in a PC could be browsed by everyone, there has been a problem in terms of security.

### SUMMARY OF THE INVENTION

It is an object of the present invention to at least partially solve the problems in the conventional technology.

According to an aspect of the present invention, there is provided an electronic whiteboard system, including a touch panel; a display device that displays information related to writing data by the touch panel; and a control device that is connected to the display device and the touch panel and includes an external or built-in storage device storing the writing data, the control device including a pass code setting processing unit that inputs and sets a storage pass code on created writing data through the touch panel, a writing data storage processing unit that stores the writing data by the touch panel in the storage device in association with the storage pass code provided from the pass code setting processing unit, a pass code input processing unit that inputs a restoration pass code which is the same as the storage pass code through the touch panel, a writing data acquisition processing unit that acquires writing data corresponding to the restoration pass code provided from the pass code input processing unit from the storage device when the writing data is present in the storage device, and a whiteboard rendering processing unit that renders the writing data acquired by the writing data acquisition processing unit on the display device.

According to another aspect of the present invention, there is provided an electronic whiteboard device, including: a touch panel; a display unit that displays information related to writing data by the touch panel; and a control device that includes an external or built-in storage device storing the writing data, the control device including a pass code setting processing unit that inputs and sets a storage pass code on created writing data through the touch panel, a writing data storage processing unit that stores the writing data by the touch panel in the storage device in association with the storage pass code provided from the pass code setting processing unit, a pass code input processing unit that inputs a restoration pass code which is the same as the storage pass code through the touch panel, a writing data acquisition processing unit that acquires writing data corresponding to the restoration pass code provided from the pass code input processing unit from the storage device when the writing data is present in the storage device, and a whiteboard rendering processing unit that renders the writing data acquired by the writing data acquisition processing unit on the display device.

According to still another aspect of the present invention, there is provided a method of controlling an electronic whiteboard system, the electronic whiteboard system including a touch panel, a display device that displays information related to writing data by the touch panel, and a control device that is connected to the display device and the touch panel and includes an external or built-in storage device storing the writing data, the method including: inputting and setting a storage pass code on created writing data through the touch panel; storing the writing data by the touch panel in the storage device in association with the storage pass code provided from the pass code setting processing unit; inputting a restoration pass code which is the same as the storage pass code through the touch panel; acquiring writing data corresponding to the restoration pass code provided from the pass code input processing unit from the storage device when the writing data is present in the storage device; and rendering the writing data acquired by the writing data acquisition processing unit on the display device.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram illustrating an exemplary configuration of an electronic whiteboard system according to an embodiment of the present invention;
FIG. 2 is a functional block diagram illustrating a hardware configuration of a PC that controls an electronic whiteboard system;
FIG. 3 is a functional block diagram illustrating a software configuration of a PC that controls an electronic whiteboard system;
FIG. 4 is a flowchart illustrating a flow of an electronic whiteboard function start process by a whiteboard start processing unit;
FIG. 5 is a diagram illustrating an example of a whiteboard start screen;
FIG. 6 is a schematic diagram illustrating a configuration of a page container;
FIG. 7 is a flowchart illustrating an acquisition process of writing data from a hard disk by a writing data acquisition processing unit;
FIG. 8 is a diagram illustrating an example of a pas code input screen;
FIG. 9 is a diagram illustrating an example of an error message;
FIG. 10 is a flowchart illustrating a pass code input process by a pass code input processing unit;
FIG. 11 is a flowchart illustrating a flow of a whiteboard use process by a whiteboard use processing unit;
FIG. 12 is a diagram illustrating a whiteboard initial screen;
FIG. 13 is a diagram illustrating a whiteboard initial screen;
FIG. 14 is a flowchart illustrating a flow of a page insertion process by a page insertion processing unit;
FIG. 15 is a flowchart illustrating a flow of a next page movement process by a next page movement processing unit;
FIG. 16 is a flowchart illustrating a flow of a previous page movement process by a previous page movement processing unit;
FIG. 17 is a flowchart illustrating a flow of a whiteboard termination process by a whiteboard termination processing unit;
FIG. 18 is a flowchart illustrating a flow of a writing data storage process by a writing data storage processing unit;
FIG. 19 is a diagram illustrating an example of a storage confirmation screen;
FIG. 20 is a flowchart illustrating a flow of a pass code setting process by a pass code setting processing unit;
FIG. 21 is a diagram illustrating an example of a pass code setting screen (first);
FIG. 22 is a flowchart illustrating a flow of a setting process of a pass code with a date;
   and
FIG. 23 is a diagram illustrating an example of a pass code setting screen (second).

### DETAILED DESCRIPTION OF THE PREFERRED EMBODIMENTS

Hereinafter, an electronic whiteboard system according to an embodiment of the present invention will be described in detail with reference to the accompanying drawings.

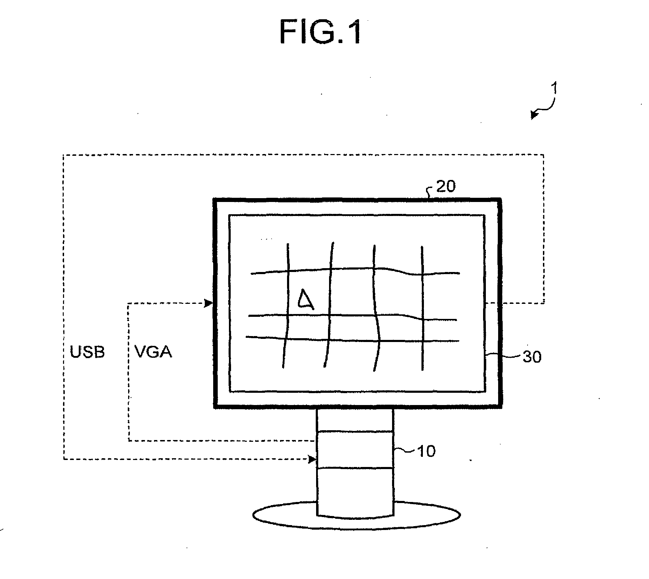

FIG. 1 is a diagram illustrating an exemplary configuration of an electronic whiteboard system according to an embodiment of the present invention.

As illustrated in FIG. 1, an electronic whiteboard system 1 includes: a PC 10 (dedicated PC) as a control device; a display (a display device) 20 that displays a screen for the PC 10 or handwritten writing data (writing data); a touch panel 30 that is arranged on the front surface of the display 20 to receive handwritten writing data such as characters and diagrams, or PC operation information through touching a touch screen with a fingertip or a stylus; and a touch panel controller 31 that performs, for example, a calculation of the coordinate position on the touched touch surface of the touch panel.

The PC 10 is connected with the display 20 via a video graphics array (VGA) cable. The touch panel 30 (the touch panel controller 31) is connected with the PC 10 via a universal serial bus (USB) cable. In the present embodiment, a special configuration is not required for the electronic whiteboard system, and the electronic whiteboard system may be implemented by the same configuration as disclosed in Japanese Patent Application Laid-open No. 2000-043484 or http://hitachisoft.jp/products/starboard/index.html.

The electronic whiteboard system is described as an electronic whiteboard system having the PC 10, the display 20, and the touch panel 30 in the present embodiment, but the electronic whiteboard system may be an integration of these components.

For that case, each of the hardware components described as components of the configuration of the PC 10 functions as a control unit of the electronic whiteboard device.

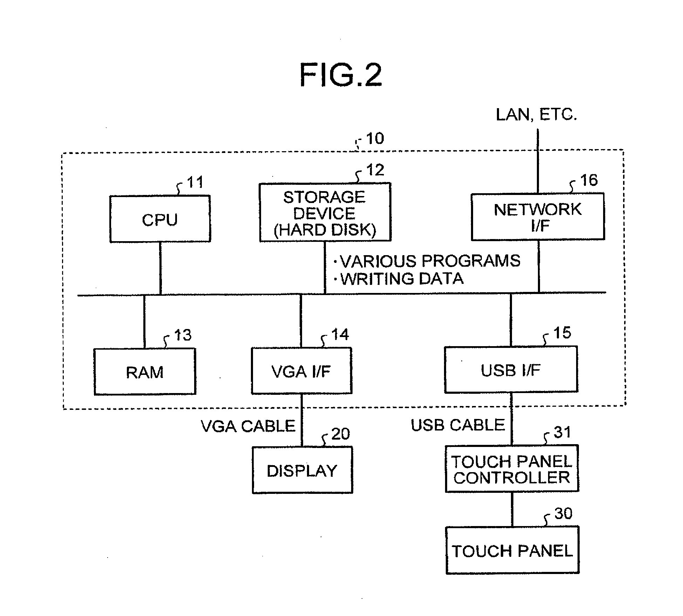

FIG. 2 is a functional block diagram illustrating the hardware configuration of a PC that controls the electronic whiteboard system of the present invention.

Referring to FIG. 2, the PC 10 includes: a central processing unit (CPU) 11 as a control means that executes various programs for implementing a function of an electronic whiteboard and that controls the PC 10 itself; a hard disk 12 as a storage device that stores the various programs and writing data; a random access memory (RAM) 13 in which various programs or writing data stored in the hard disk is to be developed for processing by the CPU 11; a video graphics array interface (VGA I/F) 14 that functions as an interface for connecting the display 20 to the PC 10; and a universal serial bus interface (USB I/F) 15 that functions as an interface for connecting the touch panel 30 to the PC 10.

With the configuration in which the PC 10 is further provided with a network interface (network I/F) 16 to thereby be able to refer to a remote storage area, for example, a network-attached storage (NAS) or a file server installed on a network such as a local area network (LAN), and to store and read writing data, the writing data can be shared between electronic whiteboard systems.

Thus, writing data created by a certain electronic whiteboard system can be reused by another electronic whiteboard system.

However, the following description will be made under the assumption that writing data is retained in the storage device (the hard disk 12) installed in the PC 10.

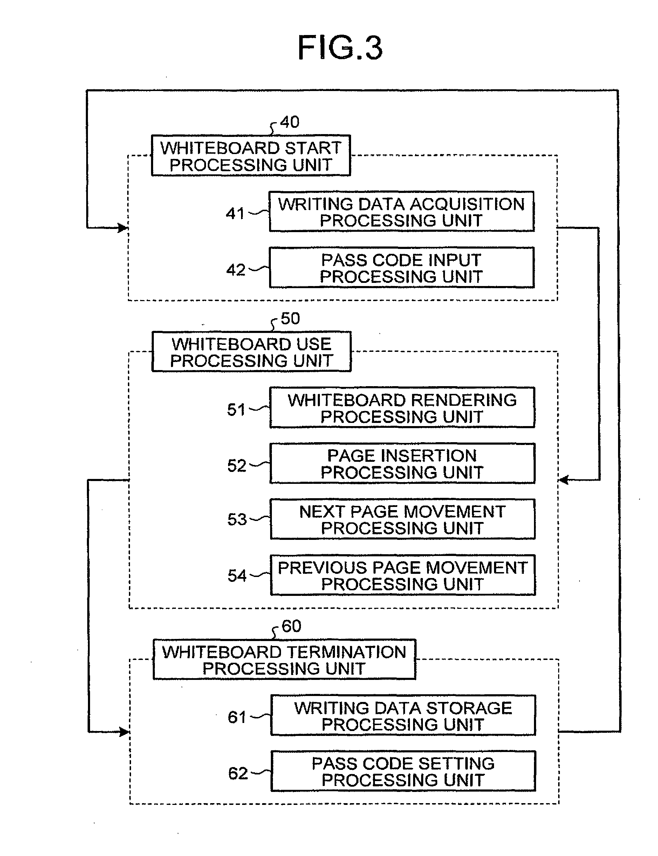

FIG. 3 is a functional block diagram illustrating the software configuration of the PC 10 that controls the electronic whiteboard system of the present invention.

All of functional units illustrated in FIG. 3 are read out from the hard disk 12 to be loaded into the RAM 13, and are then executed by the CPU 11. The functional units configure a software program implementing an electronic whiteboard function according to the present invention.

In the present embodiment, the electronic whiteboard function is on the premise of an always-on operation during a period from the power-on to the power-off of the PC. Thus, stages for starting and stopping of the electronic whiteboard function will not be specified.

In the PC 10, executed are mainly a whiteboard start processing unit 40 that performs an electronic whiteboard function start process of creating a new writing data or re-opening a writing data that has been previously created and stored in the hard disk 12; a whiteboard use processing unit 50 that performs an electronic whiteboard function use process, for example, of receiving writing data by a function of the touch panel 30, creating a new page for writing data, or browsing a written page; and a whiteboard termination processing unit 60 that performs an electronic whiteboard function termination process, for example, of storing created or written writing data in the hard disk 12.

The whiteboard start processing unit 40 includes a writing data acquisition processing unit 41 that acquires (reads) writing data stored in the hard disk 12 and a pass code input processing unit 42 that performs a process of inputting a pass code (a restoration pass code) when writing data is read from the hard disk 12.

The whiteboard start processing unit 40 selects whether to start the electronic whiteboard function newly or to start the electronic whiteboard function using stored writing data. In the case of starting the electronic whiteboard function using stored writing data, by the pass code input processing unit 42 inputting a pass code, the writing data acquisition processing unit 41 reads the writing data stored in the hard disk 12.

The whiteboard use processing unit 50 includes a whiteboard rendering processing unit 51, a page insertion processing unit 52, a next page movement processing unit (subsequent page movement processing unit) 53, and a previous page movement processing unit 54, which will be described later.

A rendering process of writing data by the whiteboard rendering processing unit 51 is not a feature of the present invention, and thus a detailed operation thereof will not be specified. For example, the rendering process of writing data by the whiteboard rendering processing unit 51 may be implemented using a function disclosed in Japanese Patent Application Laid-open NO. 2000-043484 and http:llhitachisoft.jp/products/starboardlindex.html.

The whiteboard termination processing unit 60 includes a writing data storage processing unit 61 that performs a process of storing writing data in the hard disk 12 and a pass code setting processing unit 62 that performs setting of a pass code (a storage pass code) on writing data at the time of storage.

The whiteboard termination processing unit 60 selects whether or not to store writing data at the time of termination. When determined to store the writing data, the pass code setting processing unit 62 performs setting of a pass code, and then the writing data storage processing unit 61 stores the writing data in the hard disk 12.

As soon as the termination process by the whiteboard termination processing unit 60 is finished, the whiteboard start process by the whiteboard start processing unit 40 is returned.

Next, a description will be made in connection with concrete examples of the processes performed by the processing units of the electronic whiteboard system of the present invention.

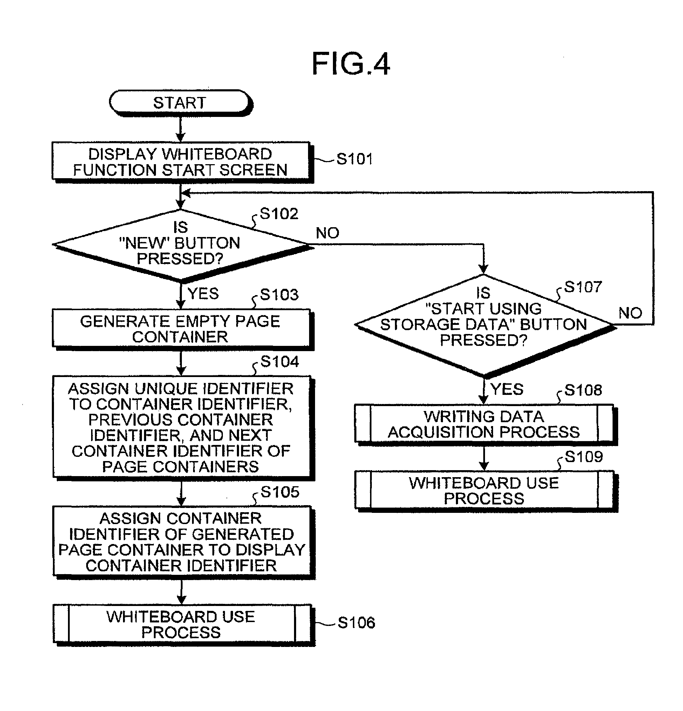

FIG. 4 is a flowchart illustrating the flow of the electronic whiteboard function start process by the whiteboard start processing unit 40.

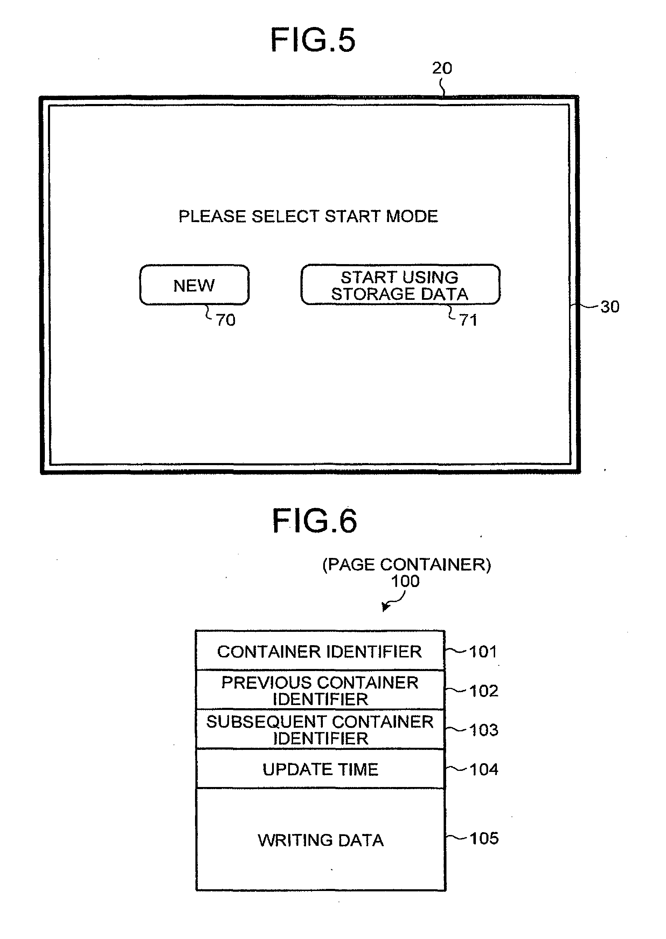

First, the whiteboard start processing unit 40 displays, on the display 20, a whiteboard start screen for allowing a user to select whether to start an electronic whiteboard function newly or to start an electronic whiteboard function reusing stored writing data, as illustrated in FIG. 5 (Step S101).

A detailed implementation method of the screen of FIG. 5 is not specified, but when the user touches a "new" button 70 (which is an operation on the touch panel but hereinafter described as pressing a button down for convenience) (Yes in Step S102), in Step S103 to Step S105, a process of preparing for the new start is performed. If the preparation process is completed, the whiteboard use process by the whiteboard use processing unit 50 starts (Step S106).

On the other hand, when the user presses "start using storage data" button 71 down (No in Step S102 and Yes in Step S107), the writing data acquisition processing unit 41 executes a process of acquiring writing data stored in the hard disk 12 (Step S108). Thereafter, the whiteboard use process by the whiteboard use processing unit 50 is executed (Step S109).

In the present embodiment, page information including writing data is managed by an object called a page container.

For example, a page container represented by a display container identifier arranged on the RAM becomes a display target of the display 20.

FIG. 6 is a schematic diagram illustrating the configuration of the page container.

As illustrated in FIG. 6, the page container includes a container identifier 101 for representing uniqueness of the page container; a previous container identifier 102 for referring to a previous container; a subsequent container identifier 103 for referring to a subsequent page container; an update time 104 representing a storage time of writing data; and writing data 105 that is an entity of data written by the user using the touch panel. Since the page container has a linked list structure as a whole, page transition can be smoothly performed.

Nothing special is required as the container identifier, and for example, the container identifier may be implemented using a universally unique identifier (UUID) in which time information is used as a seed. Furthermore, nothing special is required as the writing data, and writing data may be implemented using JPEG image data of the whole screen. Further, writing data may be implemented, for example, using stroke data of a scalable vector graphic (SVG) type, which is more complicated.

Returning to FIG. 4, a description will be made in connection with the process flow when the electronic whiteboard newly starts.

When the "new" button 70 is pressed down (Yes in Step S 102), the whiteboard start processing unit 40 generates a page container 100 of one page first (Step S103).Then a unique identifier is assigned as the container identifier 101; container identifiers are assigned as the previous container identifier 102 and the subsequent container identifier 103; a generation time of the container is assigned as a storage time; and "nil" representing a blank is assigned to the writing data (Step S104). Then the container identifier of the generated page container is assigned to the display container identifier representing a page container to be displayed (Step S105).

When the above processes are completed, the whiteboard use process by the whiteboard use processing unit 50 is performed (Step S106).

Next, a description will be made in connection with the flow of the writing data acquisition process corresponding to Step S108 of FIG. 4.

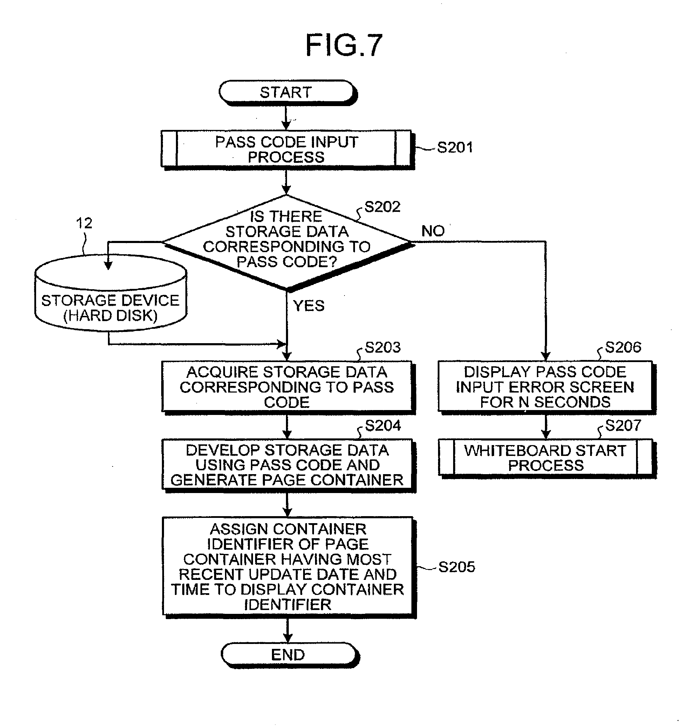

FIG. 7 is a flowchart illustrating a process of acquiring writing data from the hard disk 12 through the writing data acquisition processing unit 41.

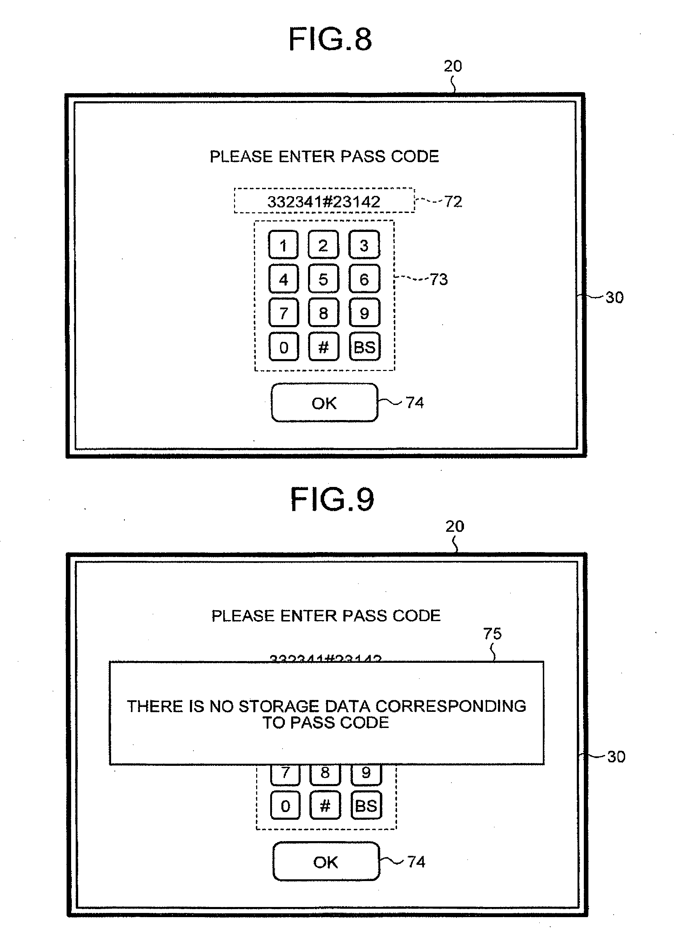

When the "start using storage data" button 71 is pressed down in the process of FIG. 4, the writing data acquisition processing unit 41 displays a pass code input screen illustrated in FIG. 8 on the display 20 and the pass code input process is executed by the pass code input processing unit 42 which will be described later (Step S201).

When the pass code is input, the writing data acquisition processing unit 41 checks whether or not the writing data corresponding to the pass code is being stored in the hard disk 12 (Step S202).

If writing data is stored in a predetermined directory of the hard disk 12 using a hash value of the pass code as a file name, it may be checked whether or not the writing data is being stored by checking whether or not a file having the same file name as the hash value of the pass code is present in a certain directory. In order to obtain the hash value of the file name, there may be used an existing calculation technique such as an existing message digest algorithm 5 (MD5)

In the present embodiment, even though a detailed description is not made, the contents of the pass code and the page container may be recorded and managed in an appropriate form using a database system.

When the writing data corresponding to the pass code is being stored (Yes in Step S202), the target file is acquired from the hard disk 12 (Step S203).

Next, the storage data is developed using the pass code since all of the page container information including the writing data is packaged and stored with a password by using the pass code, which will be described later (Step S204).

The developed page container information is assigned to the generated page container, respectively. Next, the container identifier of the page container having the most recent storage time based on the storage time of each page container is assigned to the display container identifier (Step S205), and then the process is finished. By assigning the container identifier of the page container having the most recent storage time to the display container identifier, the most recently used page is displayed in the whiteboard use process which will be described later.

Meanwhile, when the writing data corresponding to the pass code is not being stored (No in Step S202), an error message 75 such as "there is no storage data corresponding to the pass code" illustrated in FIG. 9 is displayed on the display 20 during a predetermined time period (Step S206), and then the process automatically transitions to the whiteboard start process by the whiteboard start processing unit 40 (Step S207) (returns to the whiteboard start screen of FIG. 5).

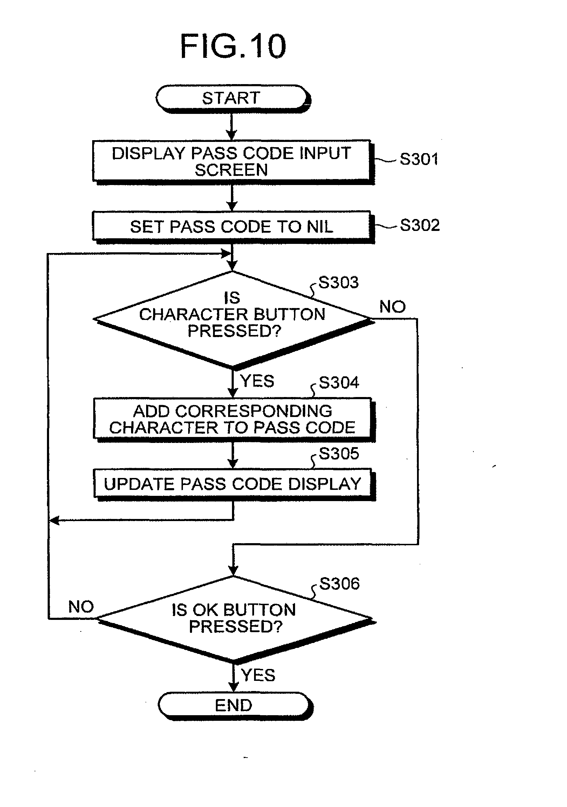

FIG. 10 is a flowchart illustrating a pass code input process by the pass code input processing unit 42.

First, the pass code input screen illustrated in FIG. 8 is displayed (Step S301); and pass code is set to "nil (zero)" (Step S302).

In the pass code input screen of FIG. 8, by pressing an input button 73 down and inputting the pass code, the pass code display 72 changes; and the input is determined by pressing an OK button 74 down.

In detail, in the input button 73 on the screen, buttons of 1,2, 3,4, 5,6, 7, 8, 9, 0, and # are pass code character string input buttons. When the buttons are pressed down, corresponding characters are added to the pass code; and when a BS button is pressed down, the pass code is deleted by one character.

The pass code which is input is displayed above the input button 73. In this example, the pass code input is displayed as being input but it may not be displayed.

When the character button is pressed down (Yes in Step S303), the corresponding character is added to the pass code (Step S304); and the display of the pass code display 72 changes (Step S305).

Until the OK button 74 is pressed (No in Step S306), a process of waiting for the pressing of the character button is performed. When the OK button 74 is pressed (Yes in Step S306), it is judged that the pass code input has been finished, and so the input process is finished. Then, the pass code is returned to the process of FIG. 7 (the writing data acquisition processing unit 41) that has called the pass code input processing unit 42.

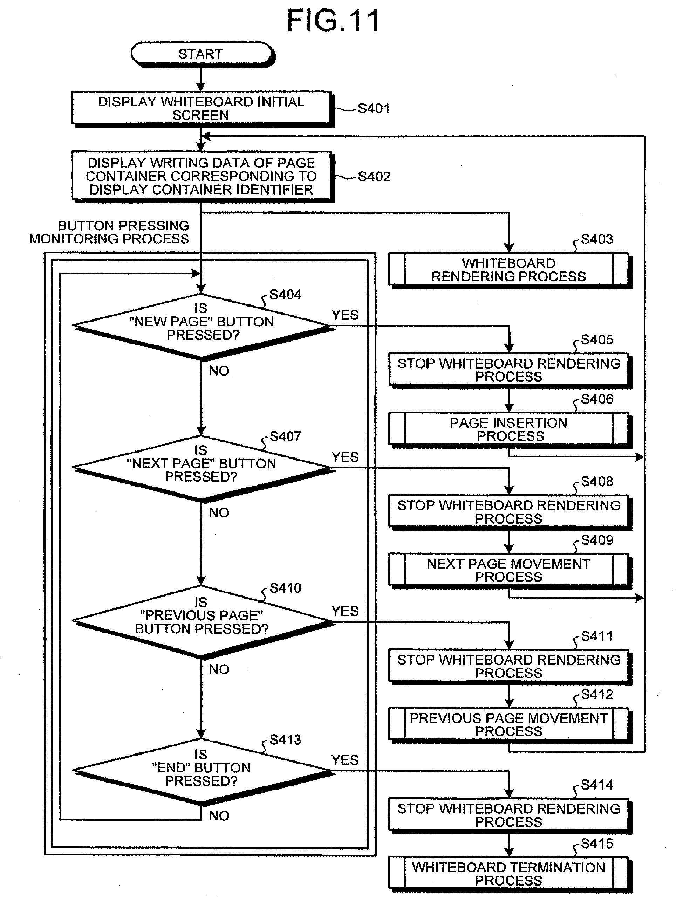

FIG. 11 is a flowchart illustrating the flow of the whiteboard use process by the whiteboard use processing unit 50.

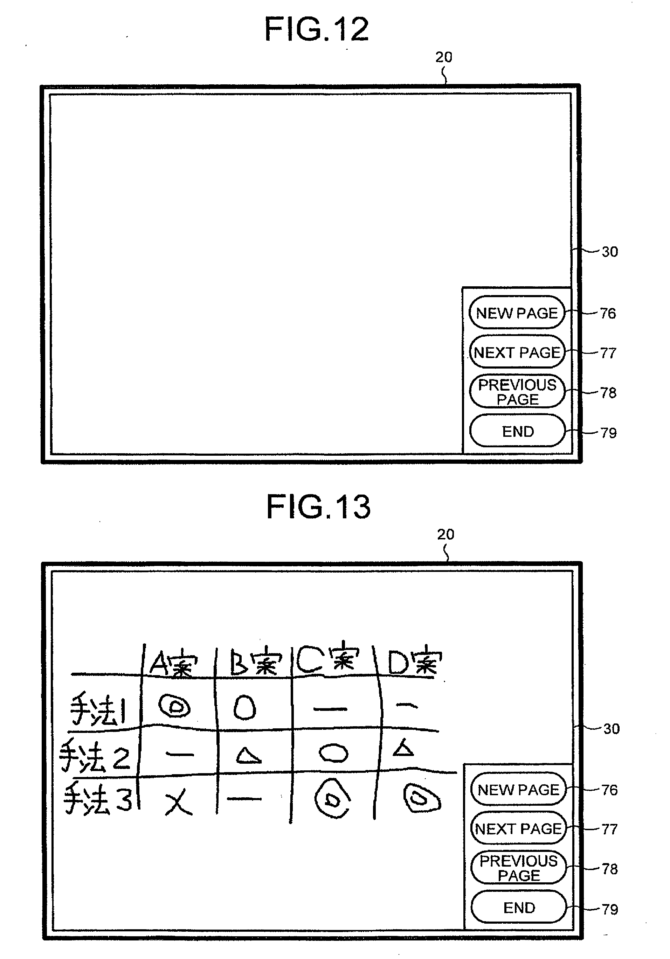

After the process of the whiteboard start processing unit 40 illustrated in FIG. 4 is finished, the whiteboard use process by the whiteboard use processing unit 50 starts. First, a whiteboard initial screen illustrated in FIG. 12 or 13 is displayed on the display 20 (Step S401).

Next, on the whiteboard initial screen, displayed is the writing data of the page container assigned to the display container identifier in the whiteboard start process (FIG. 4) by the whiteboard start processing unit 40 (Step S402).

For example, when a new start is performed, since writing data of the page container represented by the display container identifier is "nil," writing information is not displayed at all on the screen, for example, as in the whiteboard use screen illustrated in FIG. 12. However, when a restart is performed using the stored writing data as described above, since the writing data that has been lastly stored or lastly used is being stored in the page container represented by the display container identifier, the corresponding writing data is displayed on the screen, for example, as in the whiteboard use screen illustrated in FIG. 13.

Next, the process shifts to the whiteboard rendering process by the whiteboard rendering processing unit 51 (Step S403).

As described above, provided is a function of inputting the pass code at the time of using the electronic whiteboard function, acquiring the writing data associated with the pass code, restoring the acquired package with the password by using the password, and reading it as the writing data. Thus, the writing data can be conveniently reused. Further, the writing data can be safely and conveniently stored and reused at the time of using the electronic whiteboard function.

Even though repetitively performed, the writing data rendering process is not a feature of the present invention, and thus a detailed operation will not be specified. For example, the writing data rendering process may be implemented by a function disclosed in Japanese Patent Application Laid-open No. 2000-043484 or http://hitachisoft.jp/products/starboard/index.html.

Next, a description will be made in connection with an operation of new page creation and page transition based on the whiteboard use screen examples illustrated in FIGS. 12 and 13.

On the whiteboard use screen, disposed are a "new page" button 76, a "next page" button 77, a "previous page" button 78, and an "end" button 79.

Returning to the flowchart of FIG. 11, when the "new page" button 76 is pressed (Yes in Step S404), the whiteboard rendering process stops (Step S405); a new page is inserted behind a current page by a page insertion process performed by the page insertion processing unit 52 (Step S406); and the display content is emptied.

Furthermore, when the "next page" button 77 is pressed (Yes in Step S407), the whiteboard rendering process stops (Step S408); a next page becomes a display target by a next page movement process performed by the next page movement processing unit 53 (Step S409); and the writing content of the next page is displayed.

Furthermore, when the "previous page" button 78 is pressed (Yes in Step S410), the whiteboard rendering process stops (Step S411); the previous page becomes a display target by a previous page movement process performed by the previous page movement processing unit 54 (Step S412); and the writing content of the previous page is displayed.

Furthermore, when the "end" button 79 is pressed (Yes in Step S413), the whiteboard rendering process is finished (Step S414); and the process transitions to a whiteboard termination process performed by the whiteboard termination processing unit 60 (Step S415).

Furthermore, in this example, since forward and backward links of a page form a loop, page movement is not interrupted.

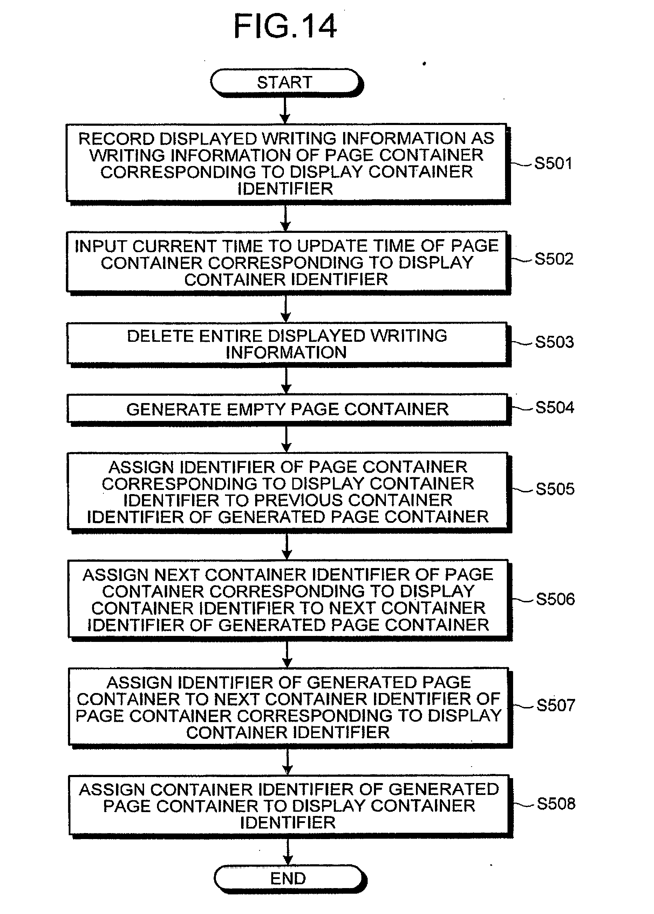

FIG. 14 is a flowchart illustrating the flow of the page insertion process by the page insertion processing unit 52.

When the process starts, the page insertion processing unit 52 specifies a page container of a display target (hereinafter, referred to as "display target page container") based on the display container identifier and stores the current screen content as a writing data of the page container (Step S501). The page insertion processing unit 52 assigns the current time to the update time of the page container (Step S502).

Next, all of the writing contents on the whiteboard are deleted (Step S503).

Next, a page container is generated, and "nil" is assigned to writing data (an empty page container is generated) (Step S504). The identifier of the display target page container is assigned to the previous container identifier of the generated page container (Step S505). The next container identifier of the display target page container is assigned to the next container identifier of the generated page container (Step S506).

Finally, the identifier of the generated page container is assigned to the next container identifier of the display target page container (Step S507); the identifier of the generated page container is assigned to the display container identifier (Step S508); and then the process is finished.

The page container generated by this process is positioned in the next page of the page container that is being displayed, and the generated page container becomes the page container of the display target.

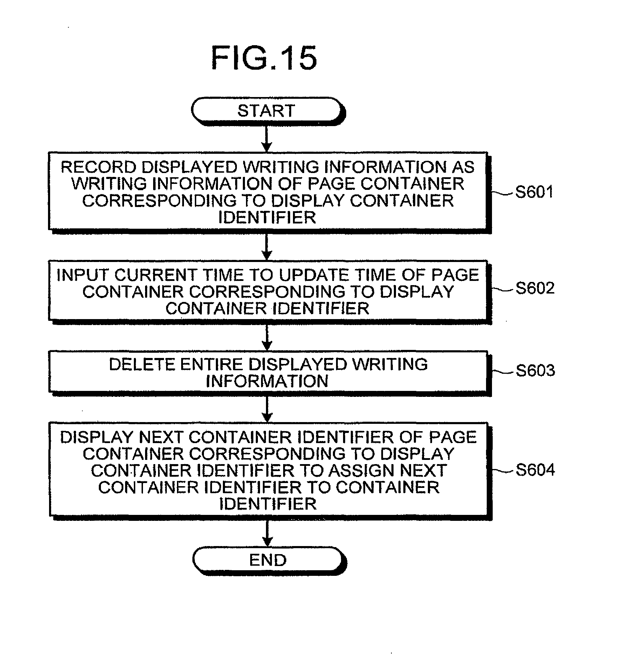

FIG. 15 is a flowchart illustrating the flow of the next page movement process by the next page movement processing unit 53.

When the process starts, the next page movement processing unit 53 specifies a page container of a display target (hereinafter, referred to as "display target page container") based on the display container identifier and stores the current screen content as a writing data of the page container (Step S601). The next page movement processing unit 53 assigns the current time to the update time of the page container (Step S602).

Next, all of the writing contents on the whiteboard are deleted (Step S603). Next, the next container identifier of the display target page container is assigned to the display container identifier (Step S604); and then the process is finished. Through this process, the next page container becomes the display target.

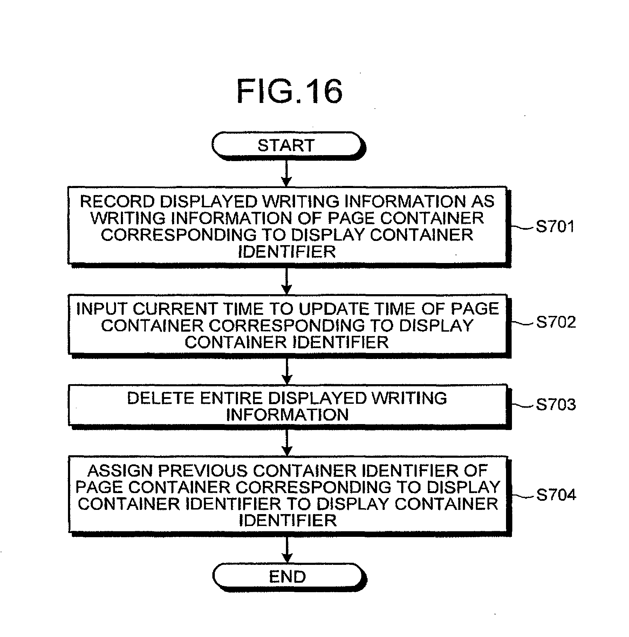

FIG. 16 is a flowchart illustrating the flow of the previous page movement process by the previous page movement processing unit 54.

When the process starts, the previous page movement processing unit 54 specifies a page container of a display target (hereinafter, referred to as "display target page container") based on the display container identifier and stores the current screen content as a writing data of the page container (Step S701). The previous page movement processing unit 54 assigns the current time to the update time of the page container (Step S702).

Next, all of the writing contents on the whiteboard are deleted (Step S703).

Next, the previous container identifier of the display target page container is assigned to the display container identifier (Step S704); and then the process is finished. Through this process, the previous page container becomes the display target.

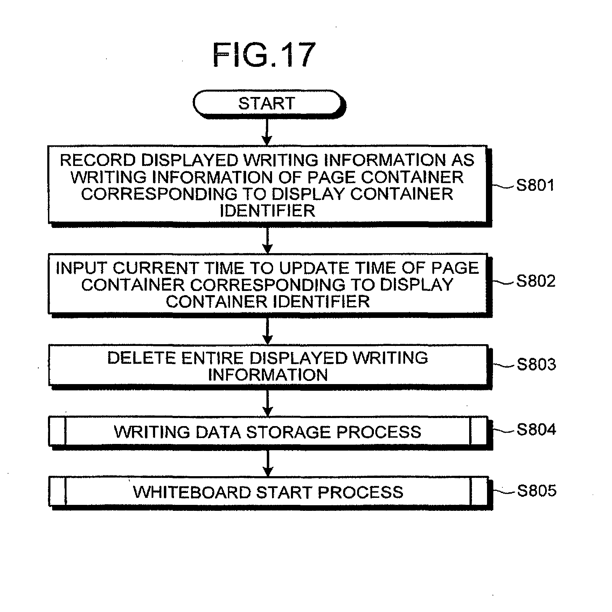

FIG. 17 is a flowchart illustrating the flow of the whiteboard termination process by the whiteboard termination processing unit 60.

When the process starts, the whiteboard termination processing unit 60 specifies a page container of a display target (hereinafter, referred to as "display target page container") based on the display container identifier and stores the current screen content as a writing data of the page container (Step S801). The whiteboard termination processing unit 60 assigns the current time to the update time of the page container (Step S802).

Next, all of the writing contents on the whiteboard are deleted (Step S803).

Next, the writing data storage processing unit 61 executes a writing data storage process for storing the contents of all of the page containers (Step S804); and thereafter, the process returns to the whiteboard start process (FIG. 5) performed by the whiteboard start processing unit 40 (Step S805).

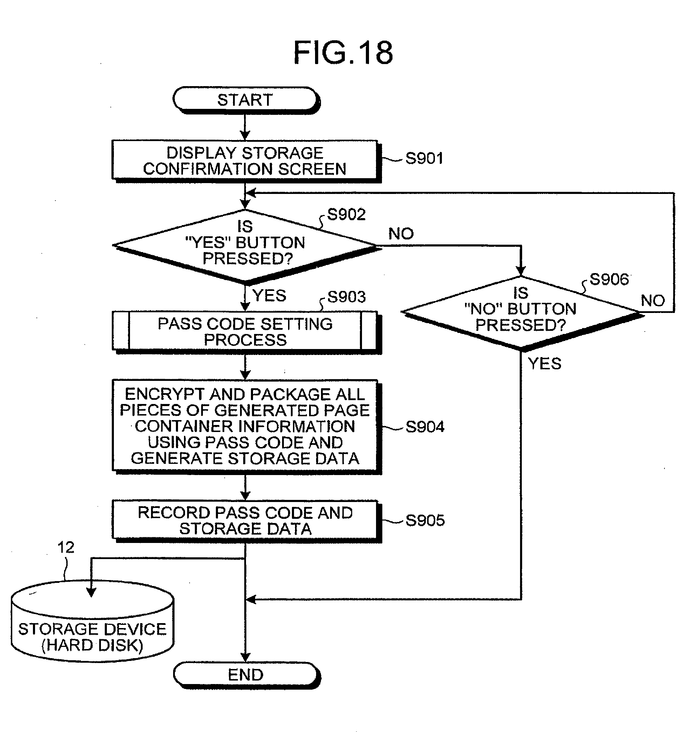

FIG. 18 is a flowchart illustrating the flow of the writing data storage process by the writing data storage processing unit 61.

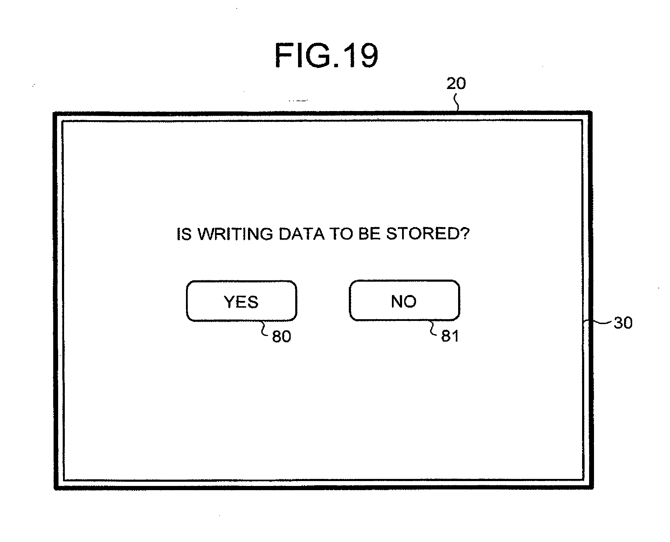

When the process starts, the writing data storage processing unit 61 displays, on the display 20, a storage confirmation screen, illustrated in FIG. 19, for inquiring whether or not to store writing data (Step S901).

When a "yes" button 80 illustrated in FIG. 19 is pressed down (Yes in Step S902), the pass code is acquired by the pass code setting process (which will be described later) performed by the pass code setting processing unit 62 (Step S903). For all of the page containers generated during the use of the electronic whiteboard function such that, the retained container identifier, the previous container identifier, the next container identifier, the update time, and the writing data are packaged with a password based on the acquired pass code, and storage data is generated using a hash value generated (calculated) based on the pass code as a file name (Step S904). The storage data is stored in a predetermined directory of the hard disk 12 and then the process is finished (Step S905).

As a technique of packaging with a password, an existing technique such as a zip with password may be used.

In order to calculate the hash value, as described in Step S202 (FIG. 7), a well-known technique such as MD5 may be used.

As described above, when the electronic whiteboard function is finished, the pass code is set; writing data is packaged with a password using the pass code; and storage is performed using a character string (a hash value) obtained by irreversible encryption of the pass code as a file name. Thus, there is nearly no chance that a person without being aware of the pass code can restore the storage data, and thus the security is ensured.

Even if any other person directly accesses the hard disk 12 and tries to restore the package (the storage data), since the file name includes the hash value, unless the pass code is known, it is difficult to "decompress" a zip with password.

Further, even though a detailed description has not been made in the present embodiment, when the pass code is set, by checking whether or not a hash value of a pass code set based on a file name in a predetermined directory has been already used, the reuse of the same pass code can be prevented.

Meanwhile, when a "no" button 81 illustrated in FIG. 19 is pressed (No in Step S902 and Yes in Step S906), the process is finished without storing the writing data.

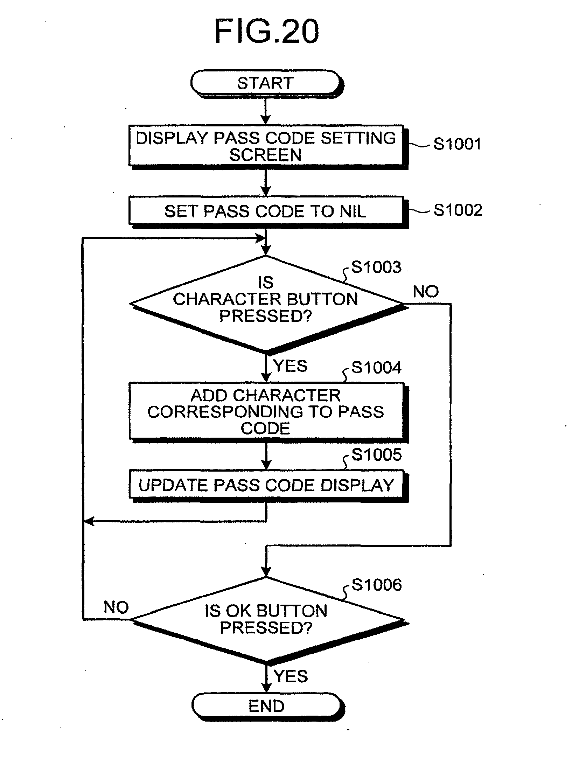

FIG. 20 is a flowchart illustrating the flow of the pass code setting process by the pass code setting processing unit 62.

The pass code setting process is similar to the pass code input process illustrated in FIG. 10, but a pass code setting screen displayed when the process starts is different from the pass code input screen of FIG. 8.

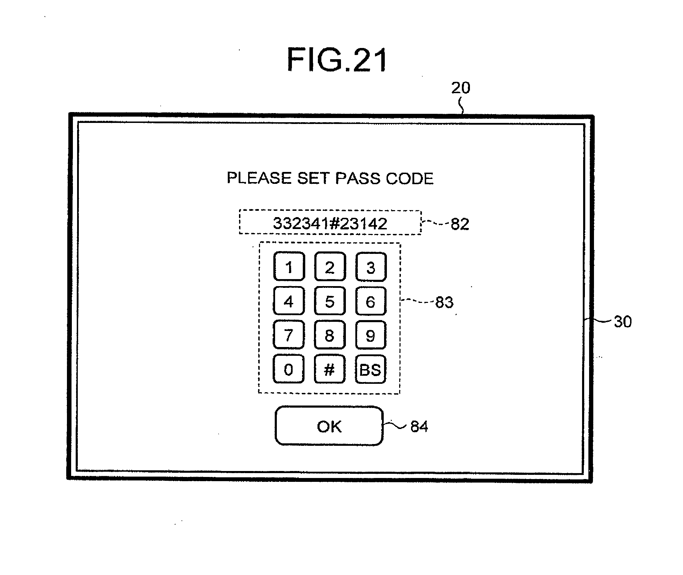

When the process starts, first, for example, a pass code setting screen illustrated in FIG. 21 is displayed on the display 20 (Step S1001), and pass code is set to "nil" (Step S1002).

In the pass code setting screen, by pressing an input button 83 down, the pass code display 82 changes, and the input is determined by pressing an OK button 84 down.

The pass code which is input is displayed above the input button 83. In this example, the pass code input is displayed as being input. Alternatively, the pass code may not be displayed.

When the character button is pressed down (Yes in Step S1003), the corresponding character is added to the pass code (Step S1004), and the display of the pass code display 82 changes (Step S 1005).

Until the OK button 84 is pressed (No in Step S1006), a process of waiting for pressing of the character button is performed. When the OK button 84 is pressed (Yes in Step S1006), it is judged that the pass code input has been finished, and so the input process is finished. Then, the pass code is returned to the process of FIG. 18 (the writing data storage processing unit 61) that has called the pass code setting processing unit 62.

At this time, there is a possibility that there the same pass codes are generated at the time of setting the pass codes as described above. As a technique for preventing this, the date of a use day may be used in the pass code.

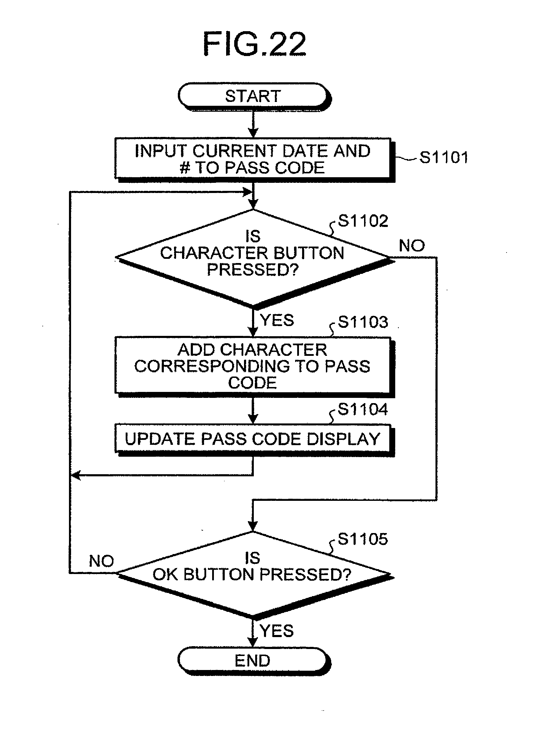

FIG. 22 is a flowchart illustrating the flow of a process of setting a pass code with a date.

The pass code setting process is also similar to the pass code input process but is different in that the date of the use day is input as an initial value of the pass code in advance.

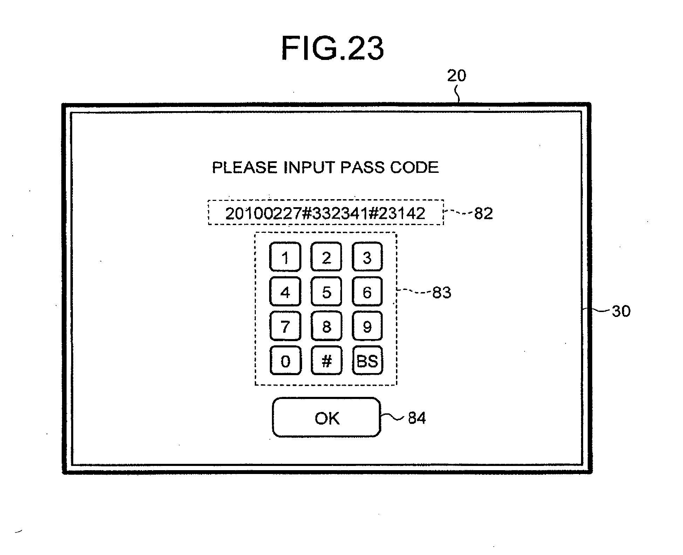

That is, like a screen for setting a pass code with a date illustrated in FIG. 23, when the use day is February 27, 2010, a character string "20100227" is entered into a pass code column at the time of the process start.

In detail, the pass code setting screen is displayed such that, for example, the pass code setting screen illustrated in FIG. 23 is displayed on the display 20 and the current date and "#" are entered as a pass code (Step S1101).

In this state, when the input button 83 is pressed down (Yes in Step S 1102), the corresponding character is added to the pass code (Step S 1103), and the display of the pass code display 82 changes (Step S1104).

Until the OK button 84 is pressed (No in Step S1105), a process of waiting for pressing of a character button is performed. When the OK button 84 is pressed (Yes in Step S 1105), it is judged that pass code input has been finished, and the input process is finished. Then, the pass code is returned to the process of FIG. 18 (the writing data storage processing unit 61) that has called the pass code setting processing unit 62.

Through the above configuration, according to the present invention, at the time of using the electronic whiteboard function, when a user stores writing data, the writing data is encrypted with a pass code that is input by the user and is then stored. Furthermore, when the stored writing data is reused, by inputting the same pass code, the stored writing data can be specified and used. Thus, security of the writing data stored at the time of using the electronic whiteboard function can be ensured, and the writing data can be conveniently reused by inputting the pass code.

Although the invention has been described with respect to specific embodiments for a complete and clear disclosure, the appended claims are not to be thus limited.

## Claims

1. An electronic whiteboard control device, connectable to:
a touch panel (30) and
a display device (20) configured to display information related to writing data by the touch panel (30)
the electronic whiteboard control device comprising:
an external or built-in storage unit (12) storing the writing data; and
a whiteboard rendering processing unit (51) configured to render the writing data acquired by a writing data acquisition processing unit (41) on the display device (20);
**characterized in that**:
the electronic whiteboard control device including:
a pass code setting processing unit (62) configured to input and set a storage pass code on created writing data,
a writing data storage processing unit (61) configured to store the writing data in the storage unit (12), wherein the writing data is encrypted with a password based on the storage pass code provided from the pass code setting processing unit (62),
a pass code input processing unit (42) configured to input a restoration pass code which is the same as the storage pass code when writing data stored in the storage unit (12) is used,
the writing data acquisition processing unit (41) configured to acquire writing data corresponding to the restoration pass code provided from the pass code input processing unit (42) from the storage unit (12) when the writing data is present in the storage unit (12), and the whiteboard rendering processing unit (51); and
the writing data storage processing unit (61) is further configured to store a hash value of the storage pass code as a file name used when the writing data is stored in the storage unit (12), said hash value being a character string which is obtained by irreversible encryption of the storage pass code, and when there is writing data of a file name matching with the hash value of the restoration pass code, the writing data acquisition processing unit (41) acquires the writing data,
said hash value being a character string which is obtained by irreversible encryption of the restoration pass code.

2. The electronic whiteboard control device according to claim 1,
wherein the pass code setting processing unit (62) is further configured to set a predetermined character string as a part of the storage pass code in advance.

3. The electronic whiteboard control device according to claim 2,
wherein the predetermined character string is date information at the time of pass code setting.

4. The electronic whiteboard control device according to any one of claims 1 to 3, further including:
a page insertion processing unit (52) configured to add a new page to the writing data,
a previous page movement processing unit (54) configured to perform movement from a page of the writing data that is being displayed on the display device (20) to a previous page, and
a subsequent page movement processing unit (53) configured to perform movement from a page of the writing data that is being displayed on the display device (20) to a subsequent page.

5. An electronic whiteboard system (1), comprising
the electronic whiteboard control device according to any one of claims 1 to 4;
a touch panel (30); and
a display device (20) configured to display information related to writing data by the touch panel (30);
wherein the electronic whiteboard control device is connected to the display device (20) and the touch panel (30).

6. A method of controlling an electronic whiteboard system (1), the electronic whiteboard system (1) including a touch panel (30), a display device (20) that displays information related to writing data by the touch panel (30), and a control device (10) that is connected to the display device (20) and the touch panel (30) and includes an external or built-in storage unit (12) storing the writing data, the method comprising:
inputting and setting a storage pass code on created writing data;
storing the writing data in the storage unit (12), wherein the writing data is encrypted with a password based on the storage pass code provided from a pass code setting processing unit (62);
storing a hash value of the storage pass code as a file name used when the writing data is stored in the storage unit (12), said hash value being a character string which is obtained by irreversible encryption of the storage pass code,
inputting a restoration pass code which is the same as the storage pass code when writing data stored in the storage unit is used;
acquiring writing data corresponding to the restoration pass code provided from a pass code input processing unit (42) from the storage unit (12) when the writing data is present in the storage unit (12), wherein when there is writing data of a file name matching with the has value of the restoration pass code, a writing data acquisition processing unit (41) acquires the writing data, said hash value being a character string which is obtained by irreversible encryption of the restoration pass code; and
rendering the writing data acquired by the writing data acquisition processing unit (41) on the display device (20).

7. A method of controlling an electronic whiteboard control device, the electronic whiteboard control device connectable to a touch panel (30) and a display device (20) that displays information related to writing data by the touch panel (30) comprises an external or built-in storage unit (12) storing the writing data,
the method comprising:
inputting and setting a storage pass code on created writing data;
storing the writing data in the storage unit (12), wherein the writing data is encrypted with a password based on the storage pass code provided from a pass code setting processing unit (62);
storing a hash value of the storage pass code as a file name used when the writing data is stored in the storage unit (12), said hash value being a character string which is obtained by irreversible encryption of the storage pass code,
inputting a restoration pass code which is the same as the storage pass code when writing data stored in the storage unit (12) is used;
acquiring writing data corresponding to the restoration pass code provided from a pass code input processing unit (42) from the storage unit (12) when the writing data is present in the storage unit (12), wherein when there is writing data of a file name matching with the hash value of the restoration pass code, a writing data acquisition processing unit (41) acquires the writing data, said hash value being a character string which is obtained by irreversible encryption of the restoration pass code; and
rendering the writing data acquired by the writing data acquisition processing unit (41) on the display device (20).

## Patentansprüche

1. Elektronische Whiteboard-Steuervorrichtung, die verbindbar ist mit:
einem berührungsempfindlichen Bildschirm (30) und
einer Anzeigevorrichtung (20), die konfiguriert ist, Informationen, die sich auf Schreibdaten durch den berührungsempfindlichen Bildschirm (30) beziehen, anzuzeigen,
wobei die elektronische Whiteboard-Steuervorrichtung umfasst:
eine externe oder eingebaute Speichereinheit (12), die die Schreibdaten speichert; und
eine Whiteboard-Wiedergabeverarbeitungseinheit (51), die konfiguriert ist, die durch eine Schreibdatenerfassungsverarbeitungseinheit (41) erfassten Schreibdaten auf der Anzeigevorrichtung (20) wiederzugeben;
**dadurch gekennzeichnet, dass**:
die elektronische Whiteboard-Steuervorrichtung enthält:
eine Passcodeeinstellverarbeitungseinheit (62), die konfiguriert ist, einen Speicherpasscode an erzeugten Schreibdaten einzugeben und einzustellen,
eine Schreibdatenspeicherverarbeitungseinheit (61), die konfiguriert ist, die Schreibdaten in der Speichereinheit (12) zu speichern, wobei die Schreibdaten mit einem Passwort, das auf dem von der Passcodeeinstellverarbeitungseinheit (62) gelieferten Passcode basiert, verschlüsselt sind,
eine Passcodeeingabeverarbeitungseinheit (42), die konfiguriert ist, einen Wiederherstellungspasscode einzugeben, der derselbe wie der Speicherpasscode ist, wenn in der Speichereinheit (12) gespeicherte Schreibdaten verwendet werden,
die Schreibdatenerfassungsverarbeitungseinheit (41), die konfiguriert ist, Schreibdaten, die dem von der Passcodeeingabeverarbeitungseinheit (42) gelieferten Wiederherstellungspasscode entsprechen, aus der Speichereinheit (12) zu erfassen, wenn die Schreibdaten in der Speichereinheit (12) vorhanden sind, und
die Whiteboard-Wiedergabeverarbeitungseinheit (51); und
wobei die Schreibdatenspeicherverarbeitungseinheit (61) ferner konfiguriert ist, einen Hash-Wert des Speicherpasscodes als einen Dateinamen zu speichern, der verwendet wird, wenn die Schreibdaten in der Speichereinheit (12) gespeichert werden, wobei der Hash-Wert eine Zeichenkette ist, die durch irreversibles Verschlüsseln des Speicherpasscodes erhalten wird, und wobei dann, wenn es Schreibdaten eines Dateinamens gibt, der mit dem Hash-Wert des Wiederherstellungspasscodes übereinstimmt, die Schreibdatenerfassungsverarbeitungseinheit (41) die Schreibdaten erfasst,
wobei der Hash-Wert eine Zeichenkette ist, die durch irreversibles Verschlüsseln des Wiederherstellungspasscodes erhalten wird.

2. Elektronische Whiteboard-Steuervorrichtung nach Anspruch 1,
wobei die Passcodeeinstellverarbeitungseinheit (62) ferner konfiguriert ist, eine vorgegebene Zeichenkette als einen Teil des Speicherpasscodes im Voraus einzustellen.

3. Elektronische Whiteboard-Steuervorrichtung nach Anspruch 2,
wobei die vorgegebene Zeichenkette Datumsinformationen zu der Zeit des Passcodeeinstellens sind.

4. Elektronische Whiteboard-Steuervorrichtung nach einem der Ansprüche 1 bis 3, die ferner enthält:
eine Seiteneinfügeverarbeitungseinheit (52), die konfiguriert ist, eine neue Seite zu den Schreibdaten hinzuzufügen,
eine Einheit für die Verarbeitung einer Bewegung zu einer vorherigen Seite (54), die konfiguriert ist, eine Bewegung von einer Seite der Schreibdaten, die auf der Anzeigevorrichtung (20) angezeigt wird, zu einer vorherigen Seite auszuführen, und
eine Einheit für die Verarbeitung einer Bewegung zu einer nachfolgenden Seite (53), die konfiguriert ist, eine Bewegung von einer Seite der Schreibdaten, die auf der Anzeigevorrichtung (20) angezeigt wird, zu einer nachfolgenden Seite auszuführen.

5. Elektronisches Whiteboard-System (1), das umfasst
die elektronische Whiteboard-Steuervorrichtung nach einem der Ansprüche 1 bis 4;
einen berührungsempfindlichen Bildschirm (30); und
eine Anzeigevorrichtung (20), die konfiguriert ist, Anzeigeinformationen, die sich auf Schreibdaten durch den berührungsempfindlichen Bildschirm beziehen, anzuzeigen;
wobei die elektronische Whiteboard-Steuervorrichtung mit der Anzeigevorrichtung (20) und dem berührungsempfindlichen Bildschirm (30) verbunden ist.

6. Verfahren zum Steuern eines elektronischen Whiteboard-Systems, wobei das elektronische Whiteboard-System (1) einen berührungsempfindlichen Bildschirm (30), eine Anzeigevorrichtung (20), die Informationen, die sich auf Schreibdaten durch den berührungsempfindlichen Bildschirm (30) beziehen, anzeigt, und eine Steuervorrichtung (10), die mit der Anzeigevorrichtung (20) und dem berührungsempfindlichen Bildschirm (30) verbunden ist, enthält und eine externe oder eingebaute Speichereinheit (12) enthält, die die Schreibdaten speichert, wobei das Verfahren umfasst:
Eingeben und Einstellen eines Speicherpasscode an erzeugten Schreibdaten;
Speichern der Schreibdaten in der Speichereinheit (12), wobei die Schreibdaten mit einem Passwort, das auf dem von einer Passcodeeinstellverarbeitungseinheit (62) gelieferten Speicherpasscode basiert, verschlüsselt sind;
Speichern eines Hash-Werts des Speicherpasscodes als einen Dateinamen, der verwendet wird, wenn die Schreibdaten in der Speichereinheit (12) gespeichert werden, wobei der Hash-Wert eine Zeichenkette ist, die durch irreversibles Verschlüsseln des Speicherpasscodes erhalten wird,
Eingeben eines Wiederherstellungspasscodes, der derselbe wie der Speicherpasscode ist, wenn in der Speichereinheit (12) gespeicherte Schreibdaten verwendet werden;
Erfassen von Schreibdaten, die dem von einer Passcodeeingabeverarbeitungseinheit (42) gelieferten Wiederherstellungspasscode entsprechen, aus der Speichereinheit (12), wenn die Schreibdaten in der Speichereinheit (12) vorhanden sind, wobei dann, wenn es Schreibdaten eines Datenamens gibt, der mit dem Hash-Wert des Wiederherstellungspasscodes übereinstimmt, eine Schreibdatenerfassungsverarbeitungseinheit (41) die Schreibdaten erfasst, wobei der Hash-Wert eine Zeichenkette ist, die durch irreversibles Verschlüsseln des Wiederherstellungspasscodes erhalten wird; und
Wiedergeben der durch die Schreibdatenerfassungsverarbeitungseinheit (41) erfassten Schreibdaten auf der Anzeigevorrichtung (20).

7. Verfahren zum Steuern einer elektronischen Whiteboard-Steuervorrichtung, wobei die elektronische Whiteboard-Steuervorrichtung, die mit einem berührungsempfindlichen Bildschirm (30) und einer Anzeigevorrichtung (20), die Informationen, die sich auf Schreibdaten durch den berührungsempfindlichen Bildschirm (30) beziehen, anzeigt, verbindbar ist, eine externe oder eingebaute Speichereinheit (12) umfasst, die die Schreibdaten speichert,
wobei das Verfahren umfasst:
Eingeben und Einstellen eines Speicherpasscode an erzeugten Schreibdaten;
Speichern der Schreibdaten in der Speichereinheit (12), wobei die Schreibdaten mit einem Passwort, das auf dem von einer Passcodeeinstellverarbeitungseinheit (62) gelieferten Speicherpasscode basiert, verschlüsselt sind;
Speichern eines Hash-Werts des Speicherpasscodes als einen Dateinamen, der verwendet wird, wenn die Schreibdaten in der Speichereinheit (12) gespeichert werden, wobei der Hash-Wert eine Zeichenkette ist, die durch irreversibles Verschlüsseln des Speicherpasscodes erhalten wird,
Eingeben eines Wiederherstellungspasscodes, der derselbe wie der Speicherpasscode ist, wenn in der Speichereinheit (12) gespeicherte Schreibdaten verwendet werden;
Erfassen von Schreibdaten, die dem von einer Passcodeeingabeverarbeitungseinheit (42) gelieferten Wiederherstellungspasscode entsprechen, aus der Speichereinheit (12), wenn die Schreibdaten in der Speichereinheit (12) vorhanden sind, wobei dann, wenn es Schreibdaten eines Datenamens gibt, der mit dem Hash-Wert des Wiederherstellungspasscodes übereinstimmt, eine Schreibdatenerfassungsverarbeitungseinheit (41) die Schreibdaten erfasst, wobei der Hash-Wert eine Zeichenkette ist, die durch irreversibles Verschlüsseln des Wiederherstellungspasscodes erhalten wird; und
Wiedergeben der durch die Schreibdatenerfassungsverarbeitungseinheit (41) erfassten Schreibdaten auf der Anzeigevorrichtung (20).

## Revendications

1. Dispositif de commande de tableau blanc électronique, connectable à :
un panneau tactile (30) et
un dispositif d'affichage (20) configuré pour afficher des informations liées à des données d'écriture par le panneau tactile (30) ;
le dispositif de commande de tableau blanc électronique comprenant :
une unité de stockage externe ou intégrée (12) stockant les données d'écriture ; et
une unité de traitement de rendu de tableau blanc (51) configurée pour rendre les données d'écriture acquises par une unité de traitement d'acquisition de données d'écriture (41) sur le dispositif d'affichage (20) ;
**caractérisé en ce que** :
le dispositif de commande de tableau blanc électronique incluant :
une unité de traitement d'établissement de code de passe (62) configurée pour entrer et établir un code de passe de stockage sur des données d'écriture créées,
une unité de traitement de stockage de données d'écriture (61) configurée pour stocker les données d'écriture dans l'unité de stockage (12), où les données d'écriture sont chiffrées avec un mot de passe basé sur le code de passe de stockage fourni par l'unité de traitement d'établissement de code de passe (62),
une unité de traitement d'entrée de code de passe (42) configurée pour entrer un code de passe de restauration qui est le même que le code de passe de stockage lorsque des données d'écriture stockées dans l'unité de stockage (12) sont utilisées,
l'unité de traitement d'acquisition de données d'écriture (41) configurée pour acquérir des données d'écriture correspondant au code de passe de restauration fourni par l'unité de traitement d'entrée de code de passe (42) à partir de l'unité de stockage (12) lorsque les données d'écriture sont présentes dans l'unité de stockage (12), et
l'unité de traitement de rendu de tableau blanc (51) ; et
l'unité de traitement de stockage de données d'écriture (61) est en outre configurée pour stocker une valeur de hachage du code de passe de stockage comme un nom de fichier utilisé lorsque les données d'écriture sont stockées dans l'unité de stockage (12), ladite valeur de hachage étant une chaîne de caractères qui est obtenue par chiffrement irréversible du code de passe de stockage, et lorsqu'il y a des données d'écriture d'un nom de fichier concordant avec la valeur de hachage du code de passe de restauration, l'unité de traitement d'acquisition de données d'écriture (41) acquiert les données d'écriture,
ladite valeur de hachage étant une chaîne de caractères qui est obtenue par chiffrement irréversible du code de passe de restauration.

2. Dispositif de commande de tableau blanc électronique selon la revendication 1,
dans lequel l'unité de traitement d'établissement de code de passe (62) est en outre configurée pour établir une chaîne de caractères prédéterminée comme une partie du code de passe de stockage à l'avance.

3. Dispositif de commande de tableau blanc électronique selon la revendication 2,
dans lequel la chaîne de caractères prédéterminée est une information de date au moment de l'établissement de code de passe.

4. Dispositif de commande de tableau blanc électronique selon l'une quelconque des revendications 1 à 3, incluant en outre :
une unité de traitement d'insertion de page (52) configurée pour ajouter une nouvelle page aux données d'écriture,
une unité de traitement de mouvement de page précédente (54) configurée pour effectuer un mouvement d'une page des données d'écriture qui est affichée sur le dispositif d'affichage (20) à une page précédente, et
une unité de traitement de mouvement de page suivante (53) configurée pour effectuer un mouvement d'une page des données d'écriture qui est affichée sur le dispositif d'affichage (20) à une page suivante.

5. Système de tableau blanc électronique (1), comprenant le dispositif de commande de tableau blanc électronique selon l'une quelconque des revendications 1 à 4 ;
un panneau tactile (30) ; et
un dispositif d'affichage (20) configuré pour afficher des informations liées à données d'écriture par le panneau tactile (30) ;
dans lequel le dispositif de commande de tableau blanc électronique est connecté au dispositif d'affichage (20) et au panneau tactile (30).

6. Procédé de commande d'un système de tableau blanc électronique (1), le système de tableau blanc électronique (1) incluant un panneau tactile (30), un dispositif d'affichage (20) qui affiche des informations liées à des données d'écriture par le panneau tactile (30), et un dispositif de commande (10) qui est connecté au dispositif d'affichage (20) et au panneau tactile (30) et inclut une unité de stockage externe ou intégrée (12) stockant les données d'écriture, le procédé comprenant :
l'entrée et l'établissement d'un code de passe de stockage sur des données d'écriture créées ;
le stockage des données d'écriture dans l'unité de stockage (12), où les données d'écriture sont chiffrées avec un mot de passe basé sur le code de passe de stockage fourni par une unité de traitement d'établissement de code de passe (62) ;
le stockage d'une valeur de hachage du code de passe de stockage comme un nom de fichier utilisé lorsque les données d'écriture sont stockées dans l'unité de stockage (12), ladite valeur de hachage étant une chaîne de caractères qui est obtenue par chiffrement irréversible du code de passe de stockage,
l'entrée d'un code de passe de restauration qui est le même que le code de passe de stockage lorsque des données d'écriture stockées dans l'unité de stockage sont utilisées ;
l'acquisition de données d'écriture correspondant au code de passe de restauration fourni par une unité de traitement d'entrée de code de passe (42) à partir de l'unité de stockage (12) lorsque les données d'écriture sont présentes dans l'unité de stockage (12), où lorsqu'il y a des données d'écriture d'un nom de fichier concordant avec la valeur de hachage du code de passe de restauration, une unité de traitement d'acquisition de données d'écriture (41) acquiert les données d'écriture, ladite valeur de hachage étant une chaîne de caractères qui est obtenue par chiffrement irréversible du code de passe de restauration ; et
le rendu des données d'écriture acquises par l'unité de traitement d'acquisition de données d'écriture (41) sur le dispositif d'affichage (20).

7. Procédé de commande d'un dispositif de commande de tableau blanc électronique, le dispositif de commande de tableau blanc électronique connectable à un panneau tactile (30) et un dispositif d'affichage (20) qui affiche des informations liées à des données d'écriture par le panneau tactile (30) comprend une unité de stockage externe ou intégrée (12) stockant les données d'écriture,
le procédé comprenant :
l'entrée et l'établissement d'un code de passe de stockage sur des données d'écriture créées ;
le stockage des données d'écriture dans l'unité de stockage (12), où les données d'écriture sont chiffrées avec un mot de passe basé sur le code de passe de stockage fourni par une unité de traitement d'établissement de code de passe (62) ;
le stockage d'une valeur de hachage du code de passe de stockage comme un nom de fichier utilisé lorsque les données d'écriture sont stockées dans l'unité de stockage (12), ladite valeur de hachage étant une chaîne de caractères qui est obtenue par chiffrement irréversible du code de passe de stockage,
l'entrée d'un code de passe de restauration qui est le même que le code de passe de stockage lorsque des données d'écriture stockées dans l'unité de stockage (12) sont utilisées ;
l'acquisition de données d'écriture correspondant au code de passe de restauration fourni par une unité de traitement d'entrée de code de passe (42) à partir de l'unité de stockage (12) lorsque les données d'écriture sont présentes dans l'unité de stockage (12), où lorsqu'il y a des données d'écriture d'un nom de fichier concordant avec la valeur de hachage du code de passe de restauration, une unité de traitement d'acquisition de données d'écriture (41) acquiert les données d'écriture, ladite valeur de hachage étant une chaîne de caractères qui est obtenue par chiffrement irréversible du code de passe de restauration ; et
le rendu des données d'écriture acquises par l'unité de traitement d'acquisition de données d'écriture (41) sur le dispositif d'affichage (20).
